# EUROPEAN PATENT APPLICATION

(11) **EP 4 838 882 A1**
(43) Date of publication of application: **11.11.2026**
(21) Application number: 25305649.3
(22) Date of filing: 07.05.2025
(51) Int. Cl.: H04N 19/117, G06N 3/082, H04N 19/70, H04N 19/82

(54) **SIGNALLING AND UPDATE OF A NEURAL NETWORK POST FILTER**

(71) Applicant: InterDigital CE Patent Holdings, SAS, 75017 Paris (FR)
(72) Inventor: DEMARTY, Claire-Helene, 35520 MONTREUIL LE GAST (FR); FRANCOIS, Edouard, 35890 BOURG DES COMPTES (FR); AUMONT, Franck, 35770 VERN SUR SEICHE (FR); AK, Ali, 91120 PALAISEAU (FR); RACAPE, Fabien, SAN FRANCISCO, 94133 (US)
(74) Representative: Rittner, Karsten

(57) **Abstract**

In one implementation, a method is presented, comprising: accessing a plurality of structure parts of a base neural network; receiving at least a structure part that is used to update a corresponding part of the base neural network; updating the corresponding part of the base neural network with the at least a structure part to form an updated neural network; and processing a video with the updated neural network. On the encoder side, a method of video encoding is presented, comprising: dividing a base neural network into a plurality of structure parts; signaling the plurality of structure parts of the base neural network; determining that the base neural network is to be updated; determining that at least a structure part is to be updated in the base neural network; and signaling the at least a structure part that is to be updated.

## Description

### BACKGROUND

The present application is related to Neural Network Post Filter (NNPF) in video compression. In particular, it relates to signalling of the NNPF architecture and parameters.

### BRIEF SUMMARY

Briefly stated, in one embodiment, a method of video decoding is presented, comprising: accessing a plurality of structure parts of a base neural network; receiving at least a structure part that is used to update a corresponding part of the base neural network; updating the corresponding part of the base neural network with the at least a structure part to form an updated neural network; and processing a video with the updated neural network.

In another embodiment, an apparatus for video decoding is presented, comprising one or more processors and at least one memory coupled to the one or more processors, wherein the one or more processors are configured to: access a plurality of structure parts of a base neural network; receive at least a structure part that is used to update a corresponding part of the base neural network; update the corresponding part of the base neural network with the at least a structure part to form an updated neural network; and process a video with the updated neural network.

In another embodiment, a method of video encoding is presented, comprising: dividing a base neural network into a plurality of structure parts; signaling the plurality of structure parts of the base neural network; determining that the base neural network is to be updated; determining that at least a structure part is to be updated in the base neural network; and signaling the at least a structure part that is to be updated.

In another embodiment, an apparatus for video encoding is presented, comprising one or more processors and at least one memory coupled to the one or more processors, wherein the one or more processors are configured to: divide a base neural network into a plurality of structure parts; signal the plurality of structure parts of the base neural network; determine that the base neural network is to be updated; determine that at least a structure part is to be updated in the base neural network; and signal the at least a structure part that is to be updated.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates the signalling and update of parts of the NNPF structure in a NNPFC SEI message, according to one or more embodiments of the present disclosure;
FIG. 5 illustrates the update of parts of the NNPF structure by update parts sent in a NNPFA SEI message, according to one or more embodiments of the present disclosure;
FIG. 6 illustrates a method of updating the NNPF structure at the encoder side, according to one or more embodiments of the present disclosure; and
FIG. 7 illustrates a method of updating the NNPF structure at the decoder side, according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

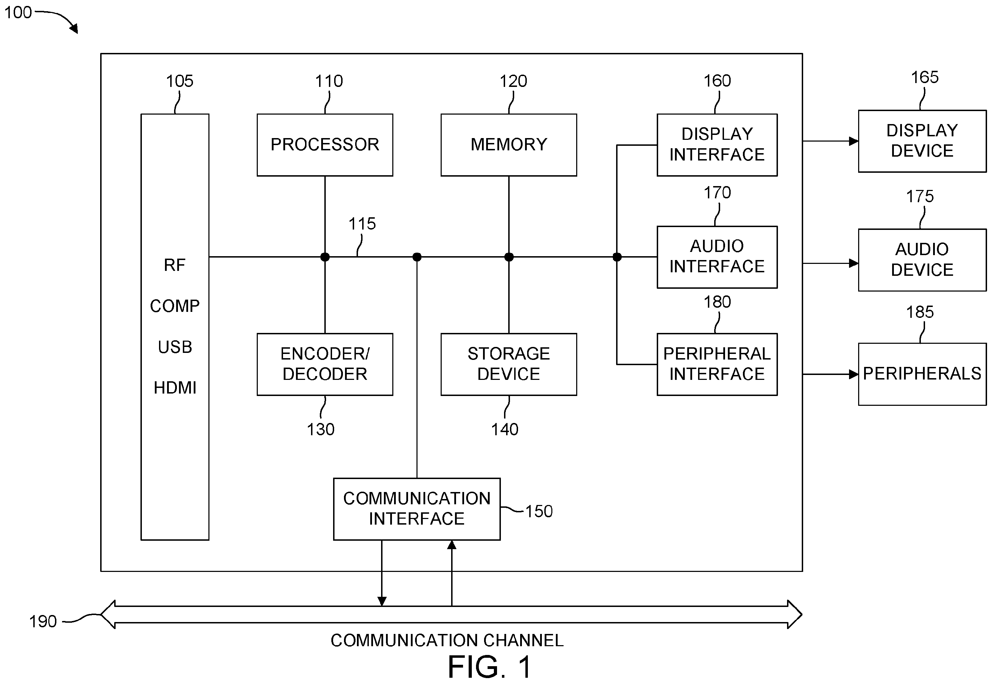

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

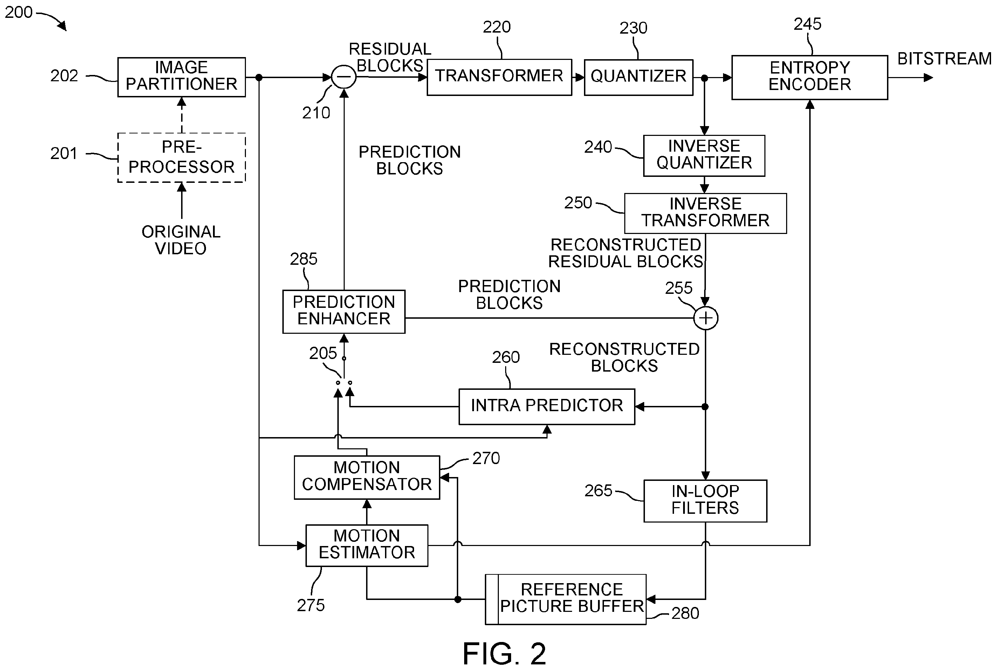

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

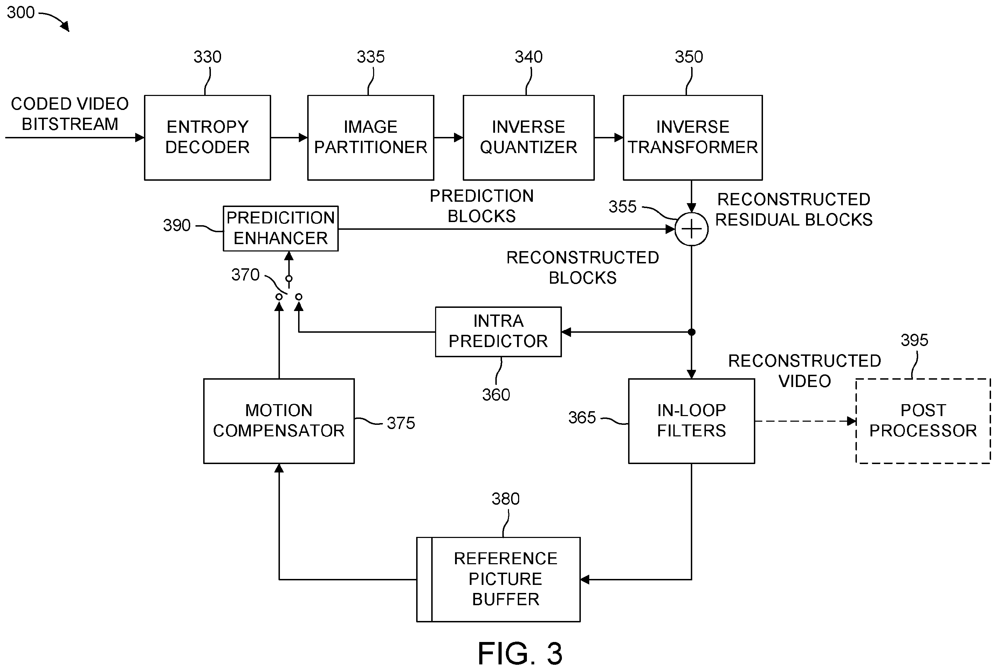

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y*, and chroma components, *U* and *V* (also denoted herein by *C*)*.*

Referring generally to FIG. 2 and the video encoder 200, video data (e.g., one or more video frames) is encoded generally as described below. Prior to encoding, video data may be pre-processed by a precoding processor (201). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (395) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream. The post-decoding processor (395) can also perform post-processing filtering, for example, using a neural-network based post-filter.

The neural-network post-filter characteristics (NNPFC) SEI message specifies a neural network that may be used as a post-processing filter. In particular, the NNPFC SEI message allows an encoder to define a neural network to be used in a post-processing operation after the decoding operation. This message also specifies the input and output of the neural network and describes its complexity.

The NNPFC SEI message indicates the intended purpose of the neural network. Up to now, 9 modes have been defined:
- Enhancing visual quality
- Chroma upsampling
- Changing spatial resolution, e.g., from high-definition decoded video to ultra-high definition
- Upsampling picture rate, e.g., from 30 Hz to 60 Hz
- Upsampling bit depth to increase the dynamic range of pixel values
- Colorization to convert monochrome video to full colors.
- Temporal extrapolation
- Spatial extrapolation
- Tone mapping

These modes are also described in the following table (cf. Table 1) extracted from an article by S. McCarthy et al., entitled "Technologies under consideration for future extensions of VSEI (version 7)," document JVET-AK2032, 37th JVET Meeting, 2025.

**Table 1: Definition of nnpfc_purpose extracted from JVET-AK2032.**

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |
| 0x80 | Spatial extrapolation (i.e., generating content outside of the spatial area of the input pictures) |
| 0x100 | Tone mapping (i.e., modification of the colour samples values, in terms of contrast, colour, saturation, luminance) |

The use of specified neural-network post-processing filters (NNPFs) for specific pictures is indicated with neural-network post-filter activation (NNPFA) SEI messages. An NNPFC SEI message, to be applied, needs to be activated by an NNPFA SEI message. The use for specific pictures of a neural-network post-processing filter specified in an NNPFC SEI message is indicated with one or more neural-network post-filter activation (NNPFA) SEI messages related to these pictures. The NNPFA SEI is used to activate an NNPFC SEI whose identifier value (signalled in the NNPFC SEI) is equal to the identifier signaled in the NNPFA SEI.

In the following, the NNPF structure is defined to correspond to both the NNPF's architecture in terms of layers, activation units, etc. and the NNPF's set of weights and parameters.

It is proposed in JVET-AL0159 (see an article by F. Cricri et al., entitled "AHG9: On backbone and tail of NNPFs," Document: JVET-AL0159, Joint Video Experts Team (JVET) of ITU-T SG 21 WP 3 and ISO/IEC JTC 1/SC 29 38th Meeting, by teleconference, 26 March - 4 April 2025) to distinguish two parts in the NNPF's structure (i.e., its architecture and weights) between a backbone part and a tail part of the network. Both parts together correspond to the full architecture of the NNPF and the full definition of all the weights. The advantage of providing the NNPF's structure in two parts is that one part can be replaced by another version, for example another NNPF's tail, which enables to improve the network in terms of quality of the processed result, or in terms of complexity (by providing another less complex tail) or to change its purpose.

In the above document, the NNPF's structure is split in only two parts, which are signalled using uniform resource identifiers (URIs). Using URIs to signal the NNPF or one of its parts enables to signal an address where the NNPF or its parts can be retrieved.

In this document, we propose to provide a way of signaling different parts (potentially more than two parts) of the NNPF structure. We also propose to provide these parts as successive sub-bitstreams that are directly included in the SEI message and not only URIs. In addition, we propose to enable the update of one of the parts in the NNPFC SEI message, and in the NNPFA SEI message.

Splitting the structure of an NNPF may have several advantages. One advantage cited in JVET-AL0159 is that part of the structure can be shared by another NNPF and therefore there is no need to get the common part of the structure for the second NNPF another time (leading to getting less data and less storage).

Other advantages are related to the ability to replace part(s) of the original NNPF structure by alternative parts, so that the purpose of the NNPF is changed, or the complexity of the NNPF is lessen, or the quality of the output is improved.

Being able to split the structure into several (e.g., numerous, more than two) different parts enables to be more generic and to increase the above benefits (replace one more specific part, in order to improve the results, to lower the complexity for example).

At least one problem to be solved is therefore to signal several parts of the NNPF structures. Another problem to be solved is to signal another part of the structure to update and replace the original corresponding part in the NNPF structure.

### NNPFC SEI message

Table 2 shows the syntax of the NNPFC SEI message, in particular the syntax elements that allow to retrieve the NNPF, either as an URI (nnpfc_mode_idc equal to 1) or directly included in the bistream (nnpfc_mode_idc equal to 0). In addition, there is an update mechanism that is enabled, based on the value of the syntax element nnpfc_base_flag. When nnpfc_base_flag == 1, the SEI message signals the base NN model, which may be updated when in a subsequent SEI message nnpfc_base_flag == 0.

**Table 2: Syntax of the NNPFC SEI message related to the signalling of the NNPF structure**

| | |
|---|---|
| nn_post_filter_characteristics( payloadSize ) { | **Descriptor** |
| **nnpfc_purpose** | u(16) |
| **nnpfc_id** | ue(v) |
| **nnpfc_base_flag** | u(1) |
| **nnpfc_mode_idc** | ue(v) |
| if( nnpfc_mode_idc = = 1) { | |
| while( !byte_aligned( ) ) | |
| **nnpfc_alignment zero_bit_a** | f(1) |
| **nnpfc_tag_uri** | st(v) |
| **nnpfc_uri** | st(v) |
| } | |
| **nnpfc_property_present_flag** | u(1) |
| ... | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | f(1) |
| for( i = 0; more_data_in_payload( ); i++ ) | |
| **nnpfc_payload_byte**[ i ] | b(8) |
| } | |
| } | |

The corresponding syntax elements are defined as below.
**nnpfc_base_flag** equal to 1 specifies that the SEI message specifies the base NNPF. nnpfc_base_flag equal to 0 specifies that the SEI message specifies an update relative to the base NNPF.

The following constraints apply to the value of nnpfc_base_flag:
- When an NNPFC SEI message is the first NNPFC SEI message, in decoding order, that has a particular nnpfc_id value within the current CLVS, the value of nnpfc_base_flag shall be equal to 1.
- All NNPFC SEI messages in a CLVS that have a particular nnpfc _id value and nnpfc_base_flag equal to 1 shall have identical SEI payload content.

When nnpfc_base_flag is equal to 0, the following applies:
- This SEI message defines an update relative to the preceding base NNPF in decoding order with the same nnpfc_id value. Updates are not cumulative but rather each update is applied on the base NNPF, which is the NNPF specified by the first NNPFC SEI message, in decoding order, that has a particular nnpfc_id value within the current CLVS. The NNPF defined by this SEI message is obtained by applying the update defined by this SEI message relative to the base NNPF with the same nnpfc_id value.
- This SEI message pertains to the current decoded picture and all subsequent decoded pictures of the current layer, in output order, until the end of the current CLVS or up to but excluding the decoded picture that follows the current decoded picture in output order within the current CLVS and is associated with a subsequent NNPFC SEI message, in decoding order, having nnpfc _base_flag equal to 0 and that particular nnpfc_id value within the current CLVS, whichever is earlier.
**nnpfc_mode_idc,** when equal to 0, indicates that the neural network information is contained in the NNPFC SEI message, and the neural network information is in the format of an ISO/IEC 15938-17 bitstream. nnpfc_mode_idc equal to 1 indicates that the neural network information is identified by the URI indicated by nnpfc_uri with the format identified by the tag URI nnpfc_tag_uri.

The value of nnpfc_mode_idc shall be in the range of 0 to 255, inclusive. Values of 2 to 255, inclusive, for nnpfc_mode_idc are reserved for future use by ITU-T | ISO/IEC and shall not be present in bitstreams conforming to this version of this Specification. Decoders conforming to this version of this Specification shall ignore NNPFC SEI messages with nnpfc_mode_idc in the range of 2 to 255, inclusive.
**nnpfc_alignment_zero_bit_a** shall be equal to 0.
**nnpfc_tag_uri** contains a tag URI with syntax and semantics as specified in IETF RFC 4151 identifying the format and associated information about the neural network used as a base NNPF or an update relative to the base NNPF with the same nnpfc_id value specified by nnpfc_uri.

NOTE 3 - nnpfc_tag_uri enables uniquely identifying the format of neural network data specified by nnpfc_uri without needing a central registration authority.
nnpfc_tag_uri equal to "tag:iso.org,2023:15938-17" indicates that the neural network data identified by nnpfc_uri conforms to ISO/IEC 15938-17.
**nnpfc_uri** contains a URI with syntax and semantics as specified in IETF Internet Standard 66 identifying the neural network used as a base NNPF or an update relative to the base NNPF with the same nnpfc_id value.
**nnpfc_payload_byte**[ i ] contains the i-th byte of a bitstream conforming to ISO/IEC 15938-17. The byte sequence nnpfc_payload_byte[ i ] for all present values of i shall be a complete bitstream that conforms to ISO/IEC 15938-17.

From this syntax, the NNPF can only be retrieved as a whole and not as meaningful parts of its structure. Although with the use of nnpfc_payload _byte syntax element, the NNPF is retrieved per byte, such parts are not meaningful in the sense that they do not correspond to blocks of the NNPF structure. Furthermore, parts of the NNPF's structure cannot be replaced by another alternative structure.

### JVET-AL0159

In JVET-AL0159, it is proposed to split the NNPF model into two parts, the backbone and the tail. The modified syntax of the NNPFC SEI message is proposed as follows (changes highlighted in italic):

**Table 3: Syntax proposed in JVET-AL0159**

| | |
|---|---|
| ... | |
| **nnpfc_num_metadata_extension_bits** | ue(v) |
| if( nnpfc_num_metadata_extension_bits > 0 ) { | |
| if( nnpfc_purpose = = 0 ) { | |
| **nnpfc_application_purpose_tag_uri_present_flag** | u(1) |
| if( nnpfc_application_purpose_tag_uri_present_flag ) { | |
| while( !byte_aligned( ) ) | |
| **nnpfc_metadata_alignment_zero_bit** | f(1) |
| **nnpfc_application_purpose_tag_uri** | st(v) |
| } | |
| } | |
| if( SpatialExtrapolationFlag ∥ ResolutionResamplingFlag ) | |
| **nnpfc_scan_type_idc** | u(2) |
| **nnpfc_for_human_viewing_idc** | u(2) |
| **nnpfc_for_machine_analysis_idc** | u(2) |
| *if( nnpfc_base_flag* = = *1 && nnpfc_mode_idc = = 1 ) {* | |
| ***nnpfc_backbone_info_flag*** | *u(1)* |
| *if( nnpfc_backbone*_*info_flag ) {* | |
| *while( !byte_aligned( ) )* | |
| ***nnpfc_metadata_alignment_b_zero_bit*** | *f(1)* |
| ***nnpfc_backbone_uri*** | *st(v)* |
| ***nnpfc_tail_uri*** | *st(v)* |
| ***}*** | |
| ***}*** | |
| **nnpfc_reserved_metadata_extension** | u(v) |
| } | |
| ... | |

**nnpfc_backbone_info_flag** equal to 1 specifies that nnpfc_backbone_uri and nnpfc_tail_uri are present. nnpfc _backbone_infoflag equal to 0 specifies that nnpfc_backbone_uri and nnpfc_tail_uri are not present.
**nnpfc_metadata_alignment_b_zero_bit** shall be equal to 0.
**nnpfc_backbone_uri** and **nnpfc_tail_uri** specify URIs with syntax and semantics as specified in IETF Internet Standard 66 identifying the backbone and the tail of the neural network used as a base NNPF. The output of the backbone is used as the input to tail. The backbone and tail are specified with the format identified by the tag URI nnpfc_tag_uri.

A decoding system may use nnpfc_backbone_uri and nnpfc_tail_uri instead of nnpfc_uri to define a neural network used as a base NNPF.

NOTE - For example, if two NNPFs defined in a bitstream have the same nnpfc_backbone_uri string and different nnpfc_tail_uri strings, the decoding system can use the nnpfc_backbone_uri to fetch the backbone only once and use the two nnpfc_tail_uri strings to fetch both the tails.

In this syntax, only two parts of the NNPF structure are signalled in the form of URIs. Furthermore, no replacement of these parts is proposed. Additionally, the signalling of several parts of the NNPF structure as several sub-bitstreams, corresponding to nnpfc_mode_idc equal to 0, is not considered. Signalling of the parts of the NNPF structure as sub-streams directly in the SEI message, and therefore in the video bitstream enables direct access to the modified parts (as they are included in the bitstream), compared to using URIs that give addresses where the modified parts can be found and further uploaded.

### JVET-AL0076

In the document JVET-AL0076 (see an article by M. Hannuksela et al., entitled "AHG9: On multi-purpose NNPFs," Document: JVET-AL0076, Joint Video Experts Team (JVET) of ITU-T SG 21 WP 3 and ISO/IEC JTC 1/SC 29 38th Meeting, by teleconference, 26 March - 4 April 2025), it is proposed to update the purpose of an NNPF. The following changes in semantics and syntax are proposed in italic.

**Table 4: Syntax proposed in JVET-AL0076**

| | |
|---|---|
| nn_post_filter_activation( payloadSize ) { | **Descriptor** |
| **nnpfa_target_id** | ue(v) |
| **nnpfa_cancel_flag** | u(1) |
| *if(* !nnpfa_cancel_flag ) { | |
| **nnpfa_persistence_flag** | u(1) |
| **nnpfa_target_base_flag** | u(1) |
| **nnpfa_no_prev_clvs_flag** | u(1) |
| if( nnpfa_persistence_flag ) | |
| **nnpfa_no_foll_clvs_flag** | |
| nnpfa_num_output_entries | ue(v) |
| for( i = 0; i < nnpfa_num_output_entries; i++ ) | |
| **nnpfa_output_flag**[ i ] | u(1) |
| if( more_data_in_payload( ) ) { | |
| **nnpfa_prompt_update_flag** | u(1) |
| if( nnpfa_prompt_update_flag ) { | |
| while( !byte_aligned( ) ) | |
| **nnpfa_alignment_zero_bit** | u(1) |
| **nnpfa_prompt** | st(v) |
| **}** | |
| **nnpfa_num_input_pic_shift** | ue(v) |
| ***nnpfa_target_purposes_present_flag*** | *u(1)* |
| *if( nnpfa_target_purposes_present_flag )* | |
| ***nnpfa_target_purposes_idc*** | *u(16)* |
| } | |
| } | |
| } | |

**nnpfa_target_purposes_present_flag** equal to 1 specifies that nnpfa_target_purposes_idc is present. nnpfa_target_purposes_present_flag equal to 0 specifies that nnpfa_target_purposes_idc is not present. When nnpfa_target_purposes_present_flag is not present, it is inferred to be equal to 0. When ( nnpfc_auxiliary_inp_idc & 8 ) is equal to 0, nnpfa_target_purposes_present_flag shall be equal to 0.
**nnpfa_target_purposes_idc** indicates the purpose of the NNPF as specified in Table 20, where ( nnpfa_target_purposes_idc & bitMask ) not equal to 0 indicates that the NNPF has the purpose associated with the bitMask value in Table 20. When ( nnpfa_target_purposes_idc & bitMask ) is equal to 0, the purpose associated with the bitMask value is not applicable to the NNPF. When ( nnpfc_purpose & bitMask ) is equal to 0 for a particular bitMask value specified in Table 20 and nnpfa_target_purposes_present_flag is equal to 1, ( nnpfa_target_purposes_idc & bitMask ) shall be equal to 0. When present, the value of nnpfa_target_purposes_idc shall be less than nnpfc_purpose and greater than 0.

The variables ChromaUpsamplingFlag, ResolutionResamplingFlag, PictureRateUpsamplingFlag, BitDepthUpsamplingFlag, ColourizationFlag, and TemporalExtrapolationFlag, specifying whether nnpfc_purpose indicates the purpose of the NNPF to include chroma upsampling, resolution resampling, picture rate upsampling, bit depth upsampling, colourization, and temporal extrapolation, respectively, are derived as follows for the parsing of the nn_post_filter_characteristics syntax structure: $\begin{matrix}ChromaUpsamplingFlag = \left(\left(nnpfc_purpose & 0\times 02\right)>0\right) ? 1 : 0 \\ ResolutionResamplingFlag = \left(\left(nnpfc_purpose & 0\times 04\right)>0\right) ? 1 : 0 \\ PictureRateUpsamplingFlag = \left(\left(nnpfc_purpose & 0\times 08\right)>0\right) ? 1 : 0 \\ BitDepthUpsamplingFlag = \left(\left(nnpfc_purpose & 0\times 10\right)>0\right) ? 1 : 0\end{matrix}$ $ColourizationFlag = \left(\left(nnpfc_purpose & 0\times 20\right)>0\right) ? 1 : 0$ $TemporalExtrapolationFlag = \left(\left(nnpfc_purpose & 0\times 40\right)>0\right) ? 1 : 0$ $SpatialExtrapolationFlag = \left(\left(nnpfc_purpose & 0\times 80\right)>0\right) ? 1 : 0$

The variable nnpfPurpose, specifying the purpose of the NNPF to be used as auxiliary input data to the NNPF, is derived as follows:
- If nnpfa_target_purposes_idc is present, nnpfPurpose is set equal to nnpfa_target_purposes_idc. \
- Otherwise, nnpfPurpose is set equal to nnpfc_purpose.

The variables ChromaUpsamplingFlag, ResolutionResamplingFlag, PictureRateUpsamplingFlag, BitDepthUpsamplingFlag, ColourizationFlag, and TemporalExtrapolationFlag, specifying whether nnpfc_purpose indicates the purpose of the NNPF to include chroma upsampling, resolution resampling, picture rate upsampling, bit depth upsampling, colourization, and temporal extrapolation, respectively, are derived as follows for the derivation of variables and operation of the NNPF: $\begin{matrix}ChromaUpsamplingFlag = \left(\left(nnpfPurpose & 0\times 02\right)>0\right) ? 1 : 0 \\ ResolutionResamplingFlag = \left(\left(nnpfPurpose & 0\times 04\right)>0\right) ? 1 : 0 \\ PictureRateUpsamplingFlag = \left(\left(nnpfPurpose & 0\times 08\right)>0\right) ? 1 : 0 \\ BitDepthUpsamplingFlag = \left(\left(nnpfPurpose & 0\times 10\right)>0\right) ? 1 : 0 \\ ColourizationFlag = \left(\left(nnpfPurpose & 0\times 20\right)>0\right) ? 1 : 0 \\ TemporalExtrapolationFlag = \left(\left(nnpfPurpose & 0\times 40\right)>0\right) ? 1 : 0 \\ SpatialExtrapolationFlag = \left(\left(nnpfPurpose & 0\times 80\right)>0\right) ? 1 : 0\end{matrix}$

In this new syntax, it clearly appears that no information is sent related to updating part of the NNPF structure (upon an update of the NNPF's purpose or not related to an update of the NNPF's purpose).

As described above, a neural network's structure may consist of several parts, for example one backbone and one tail. In another example, a neural network's structure may consist in a common part (backbone) to extract common features that will be further used to determine the outputs of several tasks, each of them corresponding to individual tails for example, a tail corresponding to a regression task, a tail corresponding to a classification task. In another example, a neural network may have several parts corresponding to several feature extraction parts, possibly with different inputs depending on different modalities, e.g., an image, a corresponding depth map image, some textual information, etc. All these feature extraction parts may all be connected to one single tail. In another example, a neural network's structure may consist in different successive blocks of layers for example a Haar transform block that preprocesses the input content, followed by a series of invertible blocks. Alternatives of lower complexity for each of these blocks may be envisioned. Splitting the structure of an NNPF may have several advantages. Some parts of the structure can be shared by another NNPF and therefore there is no need to get the common part of the structure for the second NNPF another time (potentially requiring less energy-intensive data access and less storage). Other advantages are related to the ability to replace part of the original NNPF structure itself by alternative parts, so that the purpose of the NNPF is changed, or the complexity of the NNPF is lessen, or the quality of the output is improved. Usually, the more specific and the smaller the parts are, the more the benefits can be increased from signalling and replacing a part by another one.

This document proposes to signal the whole NNPF structure as several individual parts in the form of uniform resource identifiers or in the form of separate sub-bitstreams in the NNPFC SEI message. In the later case, this can be done using the ISO/IEC 15938-17 specification for example. This document also proposes to signal replacing parts for the NNPF structure in the NNPFC and NNPFA SEI messages, to replace their corresponding parts in the original NNPF structure.

Some aspects of the embodiments are as follows:
- Signalling of several parts of the NNPF structure in the NNPFC SEI message
   ∘ Emb.1 - The whole structure is signalled as several parts (represented by individual URIs)
   ∘ Emb.2 - The whole structure is signalled as several parts (represented by individual sub-bitstreams)
- Emb.3 - Update of parts of the NNPF structure through signalling of update parts
- Update of parts of the NNPF structure through signalling in the NNPFC SEI message
   ∘ Emb.4 - Updated parts of the structure are signalled as individual URIs in the NNPFC SEI message with nnpfc_base_flag equal to 0 and the same nnpfc_id as the NNPFC SEI message signalling the original NNPF structure
   ∘ Emb.5 - Updated parts of the structure are signalled as individual sub-bitstreams in the NNPFC SEI message with nnpfc_base_flag equal to 0 and the same nnpfc_id as the NNPFC SEI message signalling the original NNPF structureto update the original parts of the structure.
- Update of parts of the structure through signalling in the NNPFA SEI message
   ∘ Emb.6 - Updated parts of the structure are signalled as individual URIs to update the original parts of the structure
   ∘ Emb.7 - Updated parts of the structure are signalled as individual sub-bitstreams to update the original parts of the structure

### Signalling of several parts of the NNPF structure in the NNPFC SEI message

In the following two embodiments, it is proposed to signal the NNPF structure as several parts in the NNPFC SEI message.

### Emb. 1: Several parts of the NNPF structure described, each as an URI

In embodiment 1, the signaling allows splitting the NN model into several parts (including more than 2) signaled in several URIs. This embodiment corresponds to the configuration nnpfc _base_flag equal to 1 and nnpfc_mode_idc equal to 1.

The syntax is modified as follows and highlighted in italic. The full syntax (before our modification) for the NNPFC SEI message can be found in an article by J. Boyce et al., entitled "Additional SEI messages for VSEI version 4 (Draft 6)," document JVET-AL2006, 38th JVET Meeting, 2025.

**Table 5: Syntax as proposed in embodiment 1 with the NNPF structure defined as several URIs**

| | |
|---|---|
| nn_post_filter_characteristics( payloadSize ) { | **Descriptor** |
| **nnpfc_purpose** | u(16) |
| **nnpfc_id** | ue(v) |
| **nnpfc_base_flag** | u(1) |
| **nnpfc_mode_idc** | ue(v) |
| if( nnpfc_mode_idc == 1 ) { | |
| while( !byte_aligned( ) ) | |
| **nnpfc_alignment_zero_bit_a** | f(1) |
| **nnpfc_tag_uri** | st(v) |
| **nnpfc_uri** | st(v) |
| **}** | |
| **nnpfc_property_present_flag** | u(1) |
| if( nnpfc_property_present flag ) { | |
| ... | |
| **nnpfc_complexity_info_present_flag** | u(1) |
| if( nnpfc _complexity_info_present_flag ) { | |
| **nnpfc_parameter_type_idc** | u(2) |
| if( nnpfc_parameter_type_idc != 2 ) | |
| **nnpfc_log2_parameter_bit_length_minus3** | u(2) |
| **nnpfc_num_parameters_ide** | u(6) |
| **nnpfc_num_kmac_operations_idc** | ue(v) |
| **nnpfc_total_kilobyte_size** | ue(v) |
| **}** | |
| **nnpfc_num_metadata_extension_bits** | ue(v) |
| if( nnpfc_num_metadata_extension_bits > 0 ) { | |
| if( nnpfc_purpose == 0 ) { | |
| **nnpfc_application_purpose_tag_uri_present_flag** | u(1) |
| if( nnpfc_application_purpose_tag_uri_present_flag ) { | |
| while( !byte_aligned( ) ) | |
| **nnpfc_metadata_alignment_zero_bit** | f(1) |
| **nnpfc_application_purpose_tag_uri** | st(v) |
| } | |
| } | |
| if( SpatialExtrapolationFlag ∥ ResolutionResamplingFlag ) | |
| **nnpfc_scan_type_idc** | u(2) |
| **nnpfc_for_human_viewing_idc** | u(2) |
| **nnpfc_for_machine_analysis_idc** | u(2) |
| *if( nnpfc_base_flag = = 1 && nnpfc_mode_idc = = 1 ) {* | |
| ***nnpfc_structure_split_info_flag*** | u(1) |
| *if( nnpfc_structure_split_info_flag ) {* | |
| ***nnpfc_structure_split_part_nb_minus1*** | *u(16)* |
| *for(i* = *0; i* < *nnpfc_structure_split_part_nb_minus1 + 1;* | |
| *i++ ){* | |
| ***nnpfc_structure_split_part_id[ i ]*** | *u(16)* |
| *while( !byte_aligned( ) )* | |
| ***nnpfc_metadata_alignment_b_zero_bit*** | *f(1)* |
| ***nnpfc_structure_split_part_uri**[ i ]* | *st(v)* |
| ***}*** | |
| ***}*** | |
| **}** | |
| **nnpfc_reserved_metadata_extension** | u(v) |
| } | |
| } | |
| /* ISO/IEC 15938-17 bitstream */ | |
| if( nnpfc_mode_idc == 0) { | |
| while( !byte_aligned( ) ) | |
| **nnpfc_alignment_zero_bit_b** | f(1) |
| for( i = 0; more_data_in_payload( ); i++ ) | |
| **nnpfc_payload_byte**[ i ] | b(8) |
| } | |
| } | |

**In** a variant, the syntax is modified as follows by removing the conditioning on nnpfc_base_flag equal to 1. This variant enables to signal all parts of the NNPF structure, for both a base NNPF (e.g., when the message is received for the first time) or an updated version (e.g., when the message is received for the ith time, i > 1) of the base NNPF, in the NNPFC SEI message.

**Table 6: Variant of syntax as proposed in embodiment 1 with the NNPF structure defined as several URIs**

| | |
|---|---|
| ... | |
| **nnpfc_for_machine_analysis_idc** | u(2) |
| *if( nnpfc_mode_idc = = 1 ) {* | |
| ***nnpfc_structure_split_info_flag*** | u(1) |
| *if( nnpfcstructure_split_info_flag) {* | |
| ***nnpfc_structure_split_part_nb_minus1*** | *u(16)* |
| *for(i* = *0; i < nnpfc_structure_split_part_nb minus1* + *1; i++ ){* | |
| ***nnpfc_structure_split_part_id[ i ]*** | *u(16)* |
| *while( !byte_aligned( ) )* | |
| ***nnpfc_metadata_alignment_b_zero_bit*** | *f(1)* |
| ***nnpfc_structure_split_part_uri[ i ]*** | *st(v)* |
| *}* | |
| *}* | |
| } | |
| ... | |

In a variant, all these metadata, optionally conditioned by a presence flag such as or similar to the nnpfc_structure_split_info_flag, are located in different places in the syntax, for example it may be conditioned by the metadata nnpfc_mode_idc equal to 1 (or another value) at the beginning of the syntax, it may be conditioned by the metadata nnpfc_complexity_info_present_flag equal to 1.

In a variant (Table 7), the URI defining the whole network's structure might be either omitted or signalled as an alternative description of the different parts of the structure as proposed in the syntax below.

**Table 7: Syntax as proposed in embodiment 1 with the NNPF structure defined as several URIs**

| | |
|---|---|
| nn_post_filter_characteristics( payloadSize ) { | **Descriptor** |
| **nnpfc_purpose** | u(16) |
| **nnpfc_id** | ue(v) |
| **nnpfc_base_flag** | u(1) |
| **nnpfc_mode_idc** | ue(v) |
| if( nnpfc_mode_idc == 1) { | |
| *while( !byte_aligned( ) )* | |
| ***nnpfc_alignment_zero_bit_a*** | *f(1)* |
| ***nnpfc_tag_uri*** | *st(v)* |
| ***nnpfc_structure_split_info_flag*** | u(1) |
| *if( nnpfc_structure_split_info_flag ) {* | |
| ***nnpfc_structure_split_part_nb_minus1*** | *u(16)* |
| *for(i* = *0; i < nnpfcstructure split_part_nb_minus1* + *1; i+ +* ){ | |
| ***nnpfc_structure_split_part_id[ i ]*** | *u(16)* |
| *while( !byte_aligned( ) )* | |
| ***nnpfc_metadata_alignment_b_zero_bit*** | *f(1)* |
| ***nnpfc_structure_split_part_uri[ i ]*** | *st(v)* |
| *}* | |
| *} else {* | |
| *while( !byte_aligned( ) )* | |
| ***nnpfc_alignment_zero_bit_a*** | *f(1)* |
| ***nnpfc_uri*** | *st(v)* |
| ***}*** | |
| **}** | |
| **nnpfc*_*property*_*present*_*flag** | u(1) |
| ... | |

In another variant, the signalling of the whole syntax as one single URI is realized without distinguishing with the case where there might be more than one parts, by simply setting the syntax element nnpfc*_*structure_split_part_nb_minus1 equal to 0.

In a variant, the syntax elements nnpfc_structure_split_part_id[ i ] are omitted or made optional (through conditioning by a presence flag for example). Each structure's part is then identified through its index in the list of parts.

The additional semantics is defined below.
**nnpfc_structure_split_info_flag** equal to 1 specifies that nnpfc_structure_split_part_nb_minus1, nnpfc_structure_split_part_id[ i ] and **nnpfc_structure_split_part_uri[** i ] are present. nnpfc_structure_split_info_flag equal to 0 specifies that nnpfc_structure_split_part_nb_minus1, nnpfc_structure_split_part_id[ i ] and nnpfc_structure_split_part_uri[ i ] are not present.
**nnpfc_metadata_alignment_b_zero_bit** shall be equal to 0.
**nnpfc*_*structure_split_part_nb_minus1** + 1 specifies the number of parts in the structure of the NNPF when nnpfc_base_flag equals to 1.
**nnpfc_structure_split_part_id[** i ] specifies an identifier for the part of index i in the list of parts in the NNPF structure when nnpfc_base_flag equals to 1.
**nnpfc_structure_split_part_uri[** i ] specifies the URI with syntax and semantics as specified in IETF Internet Standard 66 identifying part of index i in the structure of the neural network used as a base NNPF when nnpfc_base_flag equals to 1. When nnpfc_base_flag equals to 1, the output of a part of index i is used as the input to the part of index i+1. All parts are specified with the format identified by the tag URI nnpfc_tag_uri.

Optionally, the additional syntax element nnpfc_structure_split_tag_uri[ i ] contains a tag URI with syntax and semantics as specified in IETF RFC 4151 identifying the format and associated information about the parts of the neural network used as a base NNPF when nnpfc_base_flag equals to 1.

A decoding system may use the part URIs defined above to define a neural network used as a base NNPF.

If two NNPFs defined in a bitstream share the same URIs for some of their parts, the decoding system may use these URIs to fetch these parts only once for both NNPFs.

In a variant, one single URI is signalled in the NNPFC SEI message for a given NNPF structure, but it is accompanied with a row structure description which enables to identify parts of the structure, for example in terms of layers, in terms of series of layers.

### Emb.2: Several parts of the NNPF structure described, each as a sub-bitstream

In embodiment 2, the signaling allows splitting the NN model into several parts (including more than 2) coded in the bitstream, for example using the NN coding standard ISO/IEC 15938-17. This embodiment corresponds to the configuration nnpfc_base_flag equal to 1 and nnpfc_mode_idc equal to 0.

The syntax is modified as follows and highlighted in italic:

**Table 8: Syntax as proposed in embodiment 2 with the NNPF structure defined as several separate bitstreams**

| | |
|---|---|
| .... | |
| if( nnpfc_num_metadata_extension_bits > 0 ) { | |
| if( nnpfc_purpose == 0 ) { | |
| **nnpfc_application_purpose_tag_uri_present_flag** | u(1) |
| if( nnpfc_application_purpose_tag_uri_present_flag ) { | |
| while( !byte_aligned( ) ) | |
| **nnpfc_metadata_alignment_zero_bit** | f(1) |
| **nnpfc_application_purpose_tag_uri** | st(v) |
| } | |
| } | |
| if( SpatialExtrapolationFlag ∥ ResolutionResamplingFlag ) | |
| **nnpfc_scan_type_idc** | u(2) |
| **nnpfc_for_human_viewing_idc** | u(2) |
| **nnpfc_for_machine_analysis_idc** | u(2) |
| *if( nnpfc_base_flag = = 1 && nnpfc_mode_idc* == *0) {* | |
| ***nnpfc_structure_split_info_flag*** | u(1) |
| *if( nnpfc_structure_split_info_flag) {* | |
| ***nnpfc_structure_split_part_nb_minus1*** | *u(16)* |
| *for(i* = *0; i < nnpfc_structure_split_part_nb_minus1* + *1; i++ )* | |
| ***nnpfc_structure_split_part_id[ i ]*** | *u(16)* |
| *for(i* = *0; i < nnpfc_structure_split_part_nb_minus1* + *1; i++ ){* | |
| ***nnpfc_structure_split_part_size[ i ]*** | *ue(v)* |
| *while( !byte_aligned( ) )* | |
| ***nnpfc_metadata_alignment_b_zero_bit*** | u(1) |
| *for( j* = *0; j < nnpfc_structure_split_part_size; j++ )* | |
| ***nnpfc_structure_split_payload_byte[ i ][ j ]*** | *b(8)* |
| ***}*** | |
| ***}*** | |
| ***}*** | |
| **nnpfc_reserved_metadata_extension** | u(v) |
| } | |
| } | |
| /* ISO/IEC 15938-17 bitstream */ | |
| if( nnpfc _mode _idc = = 0 ) { | |
| while( !byte_aligned( ) ) | |
| **nnpfc_alignment_zero_bit_b** | f(1) |
| for( i = 0; more_data_in_payload( ); i++ ) | |
| **nnpfc_payload_byte[ i ]** | b(8) |
| **}** | |
| **}** | |

In a variant, the conditioning on nnpfc_base_flag equal to 1 is omitted. This variant enables to signal all parts of the NNPF structure, for both a base NNPF or an updated version of the base NNPF, in the NNPFC SEI message.

The additional semantics is defined below.
**nnpfc_structure_split_info_flag** equal to 1 specifies that nnpfc_structure_split_part_nb_minus1, nnpfc_structure_split_part_id[ i ] and nnpfc_structure_split_part_uri[ i ] are present. nnpfc_structure_split_info_flag equal to 0 specifies that nnpfc_structure_split_part_nb_minus1, nnpfc_structure_split_part_id[ i ] and nnpfc_structure_split_part_uri[ i ] are not present.
**nnpfc_metadata_alignment_b_zero_bit** shall be equal to 0.
**nnpfc*_*structure_split_part_nb_minus1** + 1 specifies the number of parts in the structure of the NNPF when nnpfc_base_flag equals to 1.
**nnpfc_structure_split_part_id[** i ] specifies an identifier for the part of index i in the list of parts in the NNPF structure when nnpfc_base_flag equal to 1.
**nnpfc_structure_split_part_size[** i ] specifies the size of a bitstream conforming to ISO/IEC 15938-17, that describes the part of index i in the structure of the neural network used as a base NNPF when nnpfc _base_flag equals to 1.
**nnpfc_structure_split_payload_byte[** i ][ *j* ] contains the j-th byte of a bitstream conforming to ISO/IEC 15938-17, that describes the part of index i in the structure of the neural network used as a base NNPF when nnpfc_base_flag equals to 1. The byte sequence nnpfc_payload_byte[ j ] for all present values of j shall be a complete bitstream that conforms to ISO/IEC 15938-17.

A decoding system may use the different individual sub-bitstreams defined above to define a neural network used as a base NNPF.

In a variant, additional identifiers may accompany the individual sub-bitstreams for each part defining a structure of an NNPF. In this case, if two NNPFs defined in a bitstream share the same identifiers for some sub-bitstreams for some of their parts, the NNPFC SEI message corresponding to the second NNPF may avoid signalling the identical sub-bitstreams and only signal their identifiers. The decoding system may then use the already decoded sub-bitstreams corresponding to the identical parts (with the corresponding identifiers) from the first NNPF.

In a variant, the nnpfc_structure_split_part_id[ i ], the nnpfc_structure_split_part_size[ i ] and the series of nnpfc_structure_split_payload_byte[ i ][ j ] are signalled in one single *for* loop (for( i = 0; i < nnpfc_structure_split_part_nb_minus1 + 1; i++ )) instead of two *for* loops as shown in Table 8.

In a variant, the nnpfc_structure_split_part_id[ i ] are omitted or made optional (through conditioning by a presence flag for example). Each structure's part is then identified through its index in the list of parts.

In a variant, the defined metadata are signalled as in the syntax below, within nnpfc_mode_idc equal to 0:

**Table 9: Variant syntax as proposed in embodiment 2 with the NNPF structure defined as several separate bitstreams**

| | |
|---|---|
| .... | |
| if( nnpfc_num_metadata_extension_bits > 0 ) { | |
| if( nnpfc_purpose = = 0 ) { | |
| **nnpfc_application_purpose_tag_uri_present_flag** | u(1) |
| if( nnpfc_application_purpose_tag_uri_present_flag ) { | |
| while( !byte_aligned( ) ) | |
| **nnpfc_metadata_alignment_zero_bit** | u(1) |
| **nnpfc_application_purpose_tag_uri** | st(v) |
| } | |
| } | |
| if( SpatialExtrapolationFlag ∥ ResolutionResamplingFlag ) | |
| **nnpfc_scan_type_idc** | u(2) |
| **nnpfc_for_human_viewing_idc** | u(2) |
| **nnpfc_for_machine_analysis_idc** | u(2) |
| **nnpfc_reserved_metadata_extension** | u(v) |
| } | |
| } | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | u(1) |
| for( i = 0; more_data_in_payload( ); i++ ) | |
| **nnpfc_payload_byte[ i ]** | b(8) |
| ***nnpfc_structure_split_info_flag*** | u(1) |
| *if( nnpfc_structure*_*split*_*info_flag ) {* | |
| ***nnpfc_structure_split_part_nb_minus1*** | *u(16)* |
| *for(i* = *0; i < nnpfcstructure _split_part_nb minus1* + *1; i++ )* | |
| ***nnpfc_structure_split_part_id[ i ]*** | *u(16)* |
| *for(i* = *0; i < nnpfcstructure _split_part_nb minus1* + *1; i++ ){* | |
| ***nnpfc_structure_split_part_size[ i ]*** | *ue(v)* |
| *while( !byte_aligned( ) )* | |
| ***nnpfc_metadata_alignment_b_zero_bit*** | *f(1)* |
| *for( j* = *0; j < nnpfc_structure_split_part_size; j++ )* | |
| ***nnpfc_structure_split_payload_byte[ i ][ j ]*** | *b(8)* |
| *}* | |
| *}* | |
| } | |
| } | |

In a variant the syntax is modified as below, where the syntax elements defining the split into parts, the number of parts, their identifiers and sizes are defined first, and the bit stream corresponding to the signalling of the NNPF's parts are signalled in a second step.

**Table 10: Variant syntax as proposed in embodiment 2 with the NNPF structure defined as several separate bitstreams**

| | |
|---|---|
| if( SpatialExtrapolationFlag ∥ ResolutionResamplingFlag ) | |
| **nnpfc_scan_type_idc** | u(2) |
| **nnpfc_for_human_viewing_idc** | u(2) |
| **nnpfc_for_machine_analysis_idc** | u(2) |
| **nnpfc_reserved_metadata_extension** | u(v) |
| } | |
| } | |
| if( nnpfc _mode _idc = = 0 ) { | |
| ***nnpfc_structure_split_info_flag*** | u(1) |
| *if( nnpfc_structure_split_info_flag ) {* | |
| ***nnpfc_structure_split_part_nb_minus1*** | *u(16)* |
| *for(i* = *0; i < nnpfc_structure_split_part_nb_minus1* + *1; i+ +* ){ | |
| ***nnpfc_structure_split_part_id[ i ]*** | *u(16)* |
| ***nnpfc_structure_split_part_size[ i ]*** | *ue (v)* |
| ***}*** | |
| *}* | |
| /* ISO/IEC 15938-17 bitstream */ | |
| while( !byte_aligned( ) ) | |
| **nnpfc_alignment_zero_bit_b** | u(1) |
| for( i = 0; more_data_in_payload( ); i++ ) | |
| **nnpfc_payload_byte[ i** ] | b(8) |
| *if( nnpfc_structure_split_info_flag ) {* | |
| *for(i* = *0; i < nnpfc_structure_split_part_nb_minus1 + 1; i+ +* ){ | |
| *while( !byte_aligned( ) )* | |
| ***nnpfc_metadata_alignment_b_zero_bit*** | *f(1)* |
| *for( j* = *0; j < nnpfc_structure_split_part_size[ i ]; j+ +* ) | |
| ***nnpfc_structure_split_payload_byte[** i ][ j ]* | *b(8)* |
| *}* | |
| *}* | |
| } | |
| } | |

In a variant, all these metadata, optionally conditioned by a presence flag such as or similar to the nnpfc_structure_split_info_flag, are located in different places in the syntax, for example they may be conditioned by the metadata nnpfc_mode_idc equal to another value, they may be conditioned by the metadata nnpfc_complexity_info_present_flag equal to 1. In this case, the same semantics as defined above can also apply here.

In a variant, the bitstream defining the whole network's structure might be either omitted or signalled as an alternative description of the different parts of the structure as proposed in the below syntax.

**Table 11: Syntax as proposed in embodiment 2 with the NNPF structure defined as several sub-bitstreams**

| | |
|---|---|
| if( SpatialExtrapolationFlag ∥ ResolutionResamplingFlag ) | |
| **nnpfc_scan_type_idc** | u(2) |
| **nnpfc_for_human_viewing_idc** | u(2) |
| **nnpfc_for_machine_analysis_idc** | u(2) |
| **nnpfc_reserved_metadata_extension** | u(v) |
| } | |
| } | |
| if( nnpfc_mode_idc == 0) { | |
| ***nnpfc_structure_split_info_flag*** | u(1) |
| *if( nnpfc_structure_split_info_flag ) {* | |
| ***nnpfc_structure_split_part_nb_minus1*** | *u(16)* |
| *for(i* = *0; i < nnpfc_structure_split_part_nb_minus1 + 1; i+ +* ){ | |
| ***nnpfc_structure_split_part_id[ i ]*** | *u(16)* |
| ***nnpfc_structure_split_part_size[** i ]* | *ue (v)* |
| *}* | |
| /* ISO/IEC 15938-17 bitstream */ | |
| *for(i* = *0; i < nnpfc_structure_split_part_nb_minus1 + 1; i+ +* ){ | |
| *while( !byte_aligned( ) )* | |
| ***nnpfc_metadata_alignment_b_zero_bit*** | *f(1)* |
| *for( j* = *0; j < nnpfc_structure_split_part_size[ i ]; j+ +* ) | |
| ***nnpfc_structure_split_payload_byte[** i ][ j ]* | *b(8)* |
| *}* | |
| *} else {* | |
| *while( !byte_aligned( ) )* | |
| ***nnpfc_alignment_zero_bit_b*** | u(1) |
| *for( i* = *0; more_data_in_payload(); i++* ) | |
| ***nnpfc_payload_byte[** i ]* | *b(8)* |
| *}* | |
| } | |

In another variant, the signalling of the whole syntax as one single bitstream is realized without distinguishing with the case where there might be more than one part, by simply setting the syntax element nnpfc*_*structure_split_part_nb*_*minus1 equal to 0.

In a variant, one single bitstream is signalled in the NNPFC SEI message for a given NNPF structure, but it is accompanied with a row structure description which enables to identify parts of the structure, for example in terms of layers, in terms of series of layers.

### Emb.3: Updated parts of the NNPF structure can be signalled to update the original parts of the structure

In an embodiment, we propose to send and signal updated parts of the NNPF structure related to some original parts of the NNPF structure, with the intent that the updated parts may replace the original related parts of the structure. The replacement of parts of the structure may allow either to lower the complexity of the original structure, or to improve the quality of the output of the network, for example.

In a variant, the relation between the original parts and the updated parts is conducted through the use of identifiers, where the identifiers of the updated parts and the identifiers of the original parts should match.

In a variant, the relation between the original parts and the updated parts is conducted through the use of identifiers, where the identifiers of the updated parts and the indices of the original parts in the list of parts should match.

In a variant, the relation between the original parts and the updated parts is conducted through the use of identifiers, where the identifiers correspond to a row structure description which enables to identify parts of the structure, for example in terms of layers, in terms of series of layers.

In another variant, the signalling of the updated parts is conditioned on a change of purpose for the NNPF, for example as signalled in document JVET-AL0076, through the signalling of a syntax element signalling some updated NNPF purpose in the NNPFA SEI message.

### Update of parts of the NNPF structure in the NNPFC SEI message

### Emb.4 - Update of parts of the NNPF structure signalled as URIs in the NNPFC SEI message

In embodiment 4, the signaling allows updating parts of the NN model signalled as URIs in the NNPFC SEI message. This embodiment corresponds to the configuration nnpfc_base_flag equal to 0 and nnpfc_mode_idc equal to 1. When nnpfc_base_flag equals to 0, an updated version of the NNPF structure and of the NNPF parameters is signalled in the NNPFC SEI message.

The syntax in Table 5 can then be modified as follows.

**Table 12: Syntax as proposed in embodiment 3 with the NNPF structure updated as several separate URIs**

| | |
|---|---|
| **nnpfc_for_machine_analysis_idc** | u(2) |
| *if( nnpfc_base_flag* == *0 && nnpfc_mode_idc == 1 ) {* | |
| ***nnpfc_structure_split_info_flag*** | u(1) |
| *if( nnpfc_structure_split_info_flag) {* | |
| ***nnpfc_structure_split_part_nb_minus1*** | *u(16)* |
| *for( i* = *0; i < nnpfc_structure_split_part_nb_minus1* + *1; i++ ){* | |
| ***nnpfc_structure_split_part_id[ i ]*** | *u(16)* |
| *while( !byte_aligned( ) )* | |
| ***nnpfc_metadata_alignment_b_zero_bit*** | u(1) |
| ***nnpfc_structure_split_part_uri[ i ]*** | *st(v)* |
| ***}*** | |
| ***}*** | |
| **}** | |
| **nnpfc_reserved_metadata_extension** | u(v) |

In a variant, during update, the syntax contains a loop over all parts in the NNPF's structure, but the signalling of each part and of its corresponding identifier is conditioned by individual presence flags which enable sending only the parts that need to be updated.

The syntax in Table 6 still applies.

The semantics is modified as below, compared to embodiment 1, by taking into account the case where nnpfc_base_flag equals to 0, to signal the updated NNPF structure (as highlighted in italic).
**nnpfc_structure_split_info_flag** equal to 1 specifies that nnpfc_structure_split_part_nb_minus1, nnpfc_structure_split_part_id[ i ] and nnpfc_structure_split_part_uri[ i ] are present. nnpfc_structure_split_partinfo flag equal to 0 specifies that nnpfc_structure_split_part_nb_minus1, nnpfc_structure_split_part_id[ i ] and nnpfc_structure_split_part_uri[ i ] are not present.
**nnpfc_metadata_alignment_b_zero_bit** shall be equal to 0.
**nnpfc*_*structure_split_part_nb_minus1** + **1** specifies the number of parts in the structure of the NNPF when nnpfc_base_flag equals to 1. *When nnpfc_base_flag equals to 0, it specifies the number of parts in the structure of the NNPF that need to be updated.*
**nnpfc_structure_split_part_id[ i ]** specifies an identifier, for the part of index i in the list of parts, in the NNPF structure when nnpfc_base_flag equals to 1. *When nnpfc_base_flag equals to 0, it specifies an identifier, for the part of index i in the list of parts to be updated (update list), in the NNPF structure.*
**nnpfc_structure_split_part_uri[ i ]** specifies the URI with syntax and semantics as specified in IETF Internet Standard 66 identifying part of index i in the structure of the neural network used as a base NNPF when nnpfc_base_flag equals to 1. When nnpfc_base_flag equals to 1, the output of a part of index i is used as the input to the part of index i+1. *When nnpfc_base_flag equals to 0, it specifies the URI with syntax and semantics as specified in IETF Internet Standard 66 identifying part of index i in the list of parts to be updated in the structure of the neural network. When nnpfc_base_flag equals to 0, the output of a part of index i in the update list is used as the input to the part of index j+1 in the base neural network, where j corresponds to the index of the part in the based neural network corresponding to the part of index i in the update list. The part in the update list can be matched to the part in the structure of the neural network used as a base NNPF through the use of identifier nnpfc_structure_split_part_id[ i ].*

NOTE - Each part of the base NNPF has an identifier (the part index may be used as the identifier directly). When an identifier of a particular part (for example of index j) in the base NNPF matches identifier nnpfc_structure_split_part_id[ i ], this particular part (for example of index j) of the base NNPF is updated with part of index i from the update list. All parts are specified with the format identified by the tag URI nnpfc_tag_uri.

Optionally, the additional syntax element **nnpfc_structure_split_tag_uri[ i ]** contains a tag URI with syntax and semantics as specified in IETF RFC 4151 identifying the format and associated information about the parts of the neural network used as an update relative to the base NNPF with the same nnpfc_id value specified by nnpfc_uri, when nnpfc_base_flag equals to 0.

An example of mapping between parts in the base NNPF structure and parts in the update list is provided in the table below. In this example, the base NNPF structure (nnpfc_base_flag equal to 1) contains 5 parts, each identified by a letter (from a to e). The update list (nnpfc_base_flag equal to 0) contains two parts, namely parts with identifiers b and e. These two parts in the update list correspond to indices 1 and 4 in the original part list and therefore parts of indices 1 and 4 in the base NNPF structure would be updated with part of indices 0 and 1 in the update list, respectively.

**Table 13: Example of mapping through identifiers between parts in the base NNPF structure and parts to be updated**

| **nnpfc_base_flag equal to 1** | | |
|---|---|---|
| Index in the list of N (N=5) parts in the base NNPF structure | Identifier of parts in the base NNPF structure | |
| 0 | a | |
| 1 | b | |
| 2 | c | |
| 3 | d | |
| 4 | e | |
| | | |

| **nnpfc_base_flag equal to 0** | | |
|---|---|---|
| Index in the list of M (M=2) parts in the update list | | Identifier of parts in the update list |
| 0 | | b |
| 1 | | e |

A decoding system may use the part URIs defined above to define a neural network used as a base NNPF when nnpfc_base_flag equal to 1, or used as an updated NNPF, when nnpfc_base_flag equal to 0.

If two NNPFs defined in a bitstream share the same URIs for some of their parts, the decoding system may use these URIs to fetch these parts only once for both NNPFs.

In a variant, one single URI is signalled in the NNPFC SEI message for a given NNPF structure, but it is accompanied with a row structure description which enables to identify parts of the structure, for example in terms of layers, in terms of series of layers. In this case, identifiers of the parts that need to be updated are signalled in the NNPFC SEI message in case of nnpfc_base_flag equal to 0 and some parts of the NNPF structure need to be updated.

All variants of Emb.1 apply here.

### Emb.5 - Update of parts of the NNPF structure signalled as sub-bitstreams in the NNPFC SEI message

In embodiment 5, the signaling allows updating parts of the NN model signalled as sub-bitstreams in the NNPFC SEI message. This embodiment corresponds to the configuration nnpfc_base_flag equal to 0 and nnpfc_mode_idc equal to 0.

The syntax in Table 8 can then be modified as follows, by conditioning the signalling of the update sub bitstream with nnpfc_base_flag equal to 0.

| | |
|---|---|
| **nnpfc_for_human_viewing_idc** | u(2) |
| **nnpfc_for_machine_analysis_idc** | u(2) |
| *if( nnpfc_base_flag* == *0 && nnpfc_mode_idc ==* 0 ) *{* | |
| ***nnpfc_structure_split_info_flag*** | u(1) |
| *if( nnpfc_structure_split_info_flag ) {* | |
| ***nnpfc_structure_split_part_nb_minus1*** | *u(16)* |
| *for( i* = *0; i < nnpfc_structure_split_part_nb_minus1* + *1; i++ )* | |
| ***nnpfc_structure_split_part_id[ i ]*** | *u(16)* |
| *for( i* = *0; i < nnpfc_structure_split_part_nb_minus1* + *1; i++ ){* | |
| ***nnpfc_structure_split_part_size[ i ]*** | *ue(v)* |
| *while( !byte_aligned( ) )* | |
| ***nnpfc_metadata_alignment_b_zero_bit*** | *f(1)* |
| *for( j* = *0; j < nnpfc_structure_split_part_size; j++ )* | |
| ***nnpfc_structure_split_payload_byte[** i ][ j ]* | *b(8)* |
| *}* | |
| *}* | |
| *}* | |
| **nnpfc_reserved_metadata_extension** | u(v) |
| } | |
| } | |

The syntax in Table 9 and Table 10 still applies.

In a variant, during update, the syntax contains a loop over all parts in the NNPF's structure, but the signalling of each part and of its corresponding identifier is conditioned by individual presence flags which enable sending only the parts that need to be updated.

The semantics is modified as below, compared to embodiment 2 (changes highlighted in italic).
**nnpfc_structure_split_info_flag** equal to 1 specifies that nnpfc_structure_split_part_nb_minus1, nnpfc_structure_split_part_id[ i ] and nnpfc_structure_split_part_uri[ i ] are present. nnpfc_structure_split_info_flag equal to 0 specifies that nnpfc_structure_split_part_nb_minus1, nnpfc_structure_split_part_id[ i ] and nnpfc_structure_split_part_uri[ i ] are not present.
**nnpfc_metadata_alignment_b_zero_bit** shall be equal to 0.
**nnpfc*_*structure_split_part_nb_minus1** + **1** specifies the number of parts in the structure of the NNPF when nnpfc_base_flag equals to 1. *When nnpfc_base_flag equals to 0, it specifies the number of parts in the structure of the NNPF that need to be updated.*
**nnpfc_structure_split_part_id[ i ]** specifies an identifier for the part of index i in the list of parts in the NNPF structure when nnpfc_base_flag equals to 1. *When nnpfc_base_flag equals to 0, it specifies an identifier for the part of index i in the list of parts to be updated (update list), in the NNPF structure.*
**nnpfc_structure_split_part_size[ i ]** specifies the size of a bitstream conforming to ISO/IEC 15938-17, that describes the part of index i in the structure of the neural network used as a base NNPF when nnpfc _base_flag equals to 1. *When nnpfc_base_flag equals to 0, it describes the size of a bitstream conforming to ISO*/*IEC 15938-17, that describes the part of index i in the update list.*
**nnpfc_structure_split_payload_byte[ i ][ j ]** contains the j-th byte of a bitstream conforming to ISO/IEC 15938-17, that describes the part of index i in the structure of the neural network used as a base NNPF when nnpfc_base_flag equals to 1. *When nnpfc_base_flag equals to 0, it contains the j-th byte of a bitstream conforming to ISO*/*IEC 15938-17, that describes the part of index i in the update list.* The byte sequence nnpfc_structure_split_payload_byte[ i ][ j ] for all present values of j shall be a complete bitstream that conforms to ISO/IEC 15938-17.

A decoding system may use the different individual sub-bitstreams defined above to define a neural network used as a base NNPF, when nnpfc_base_flag equal to 1, or used as an updated NNPF, when nnpfc_base_flag equal to 0.

In a variant, additional identifiers may accompany the individual sub-bitstreams for each part defining a structure of an NNPF. In this case, if two NNPFs defined in a bitstream share the same identifiers for some sub-bitstreams for some of their parts, the NNPFC SEI message corresponding to the second NNPF may avoid signalling the identical sub-bitstreams and only signal their identifiers. The decoding system may then use the already decoded sub-bitstreams corresponding to the identical parts (with the corresponding identifiers) from the first NNPF.

In a variant, the nnpfc_structure_split_part_id[ i ], the nnpfc_structure_split_part_size[ i ] and the series of nnpfc_structure_split_payload_byte[ i ][ *j* ] are signalled in one single "for" loop.

In a variant, the nnpfc_structure_split_part_id[ i ] are omitted or made optional (through conditioning by a presence flag for example). Each structure's part is then identified through its index in the list of parts or through identifiers defined by external means.

In a variant, all these metadata, optionally conditioned by a presence flag such as or similar to the nnpfc_structure_split_info_flag, are located in different places in the syntax, for example it may be conditioned by the metadata nnpfc_mode_idc equal to another value, it may be conditioned by the metadata nnpfc_complexity_info_present_flag equal to 1. In this case, the same semantics as defined above can also apply here.

In a variant, one single bitstream is signalled in the NNPFC SEI message for a given NNPF structure, but it is accompanied with a row structure description which enables to identify parts of the structure, for example in terms of layers, in terms of series of layers. In this case, identifiers of the parts that need to be updated are signalled in the NNPFC SEI message in case of nnpfc_base_flag equals to 0 and some parts of the NNPF structure need to be updated.

All variants of Emb. 2 apply here.

### Update of parts of the NNPF structure in the NNPFA SEI message

### Emb.6 Updated parts of the NNPF structure are signalled as URIs to update the original parts of the structure

In embodiment 6, the signaling allows updating parts of the NN model signalled as URIs in the NNPFC SEI message through the signalling of metadata for at least one replacing part of the NNPF structure within the NNPFA SEI message as described in the syntax below.

**Table 14: Syntax as proposed in embodiment 4 with the NNPF updating parts defined as several URIs**

| | |
|---|---|
| nn_post filter activation( payloadSize ) { | **Descriptor** |
| **nnpfa_target_id** | ue(v) |
| **nnpfa_cancel_flag** | u(1) |
| if( !nnpfa_cancel_flag ) { | |
| **nnpfa_persistence_flag** | u(1) |
| **nnpfa_target_base_flag** | u(1) |
| **nnpfa_no_prev_clvs_flag** | u(1) |
| if( nnpfa_persistence_flag) | |
| **nnpfa_no_foll_clvs_flag** | |
| **nnpfa_num_output_entries** | ue(v) |
| for( i = 0; i < nnpfa_num_output_entries; i++ ) | |
| **nnpfa_output_flag[** i ] | u(1) |
| if( more_data_in_payload( ) ) { | |
| **nnpfa_prompt_update_flag** | u(1) |
| if( nnpfa_prompt_update_flag ) { | |
| while( !byte_aligned( ) ) | |
| **nnpfa_alignment_zero_bit** | u(1) |
| **nnpfa_prompt** | st(v) |
| } | |
| **nnpfa_num_input_pic_shift** | ue(v) |
| **nnpfa_target_purposes_present_flag** | u(1) |
| ***nnpfa_mode_idc*** | ue(v) |
| *if( **nnpfa_mode_idc == 1){*** | |
| *while( !byte_aligned() )* | |
| ***nnpfa_alignment_zero_bit_a*** | f(1) |
| *nnpfa_tag_uri* | st(v) |
| ***nnpfa_structure_split_update_info_flag*** | u(1) |
| *if( nnpfa_structure_split_update*_*info_flag) {* | |
| ***nnpfa_structure_split_update_part_nb_minus1*** | *u(16)* |
| *for( i = 0; i < nnpfa_structure_split_update_part_nb_minus1 + 1; i++ ){* | |
| ***nnpfa_structure_split_update_part_id[ i ]*** | |
| *while( !byte_aligned( ) )* | |
| ***nnpfa_alignment_zero_bit*** | *u(1)* |
| ***nnpfa_structure_split_update_part_uri[ i ]*** | *st(v)* |
| *}* | |
| *}* | |
| *}* | |
| } | |
| } | |
| } | |

In a variant the added syntax elements are also conditioned by the syntax element nnpfa_mode_idc equal to 1.

In a variant, during update, the syntax contains a loop over all parts in the base NNPF's structure, but the signalling of each part and of its corresponding identifier is conditioned by individual presence flags which enable sending only the parts that need to be updated.

The semantics of all the above syntax elements is similar to the one of the corresponding syntax elements as proposed for the NNPFC SEI message and is defined below.
**nnpfa_mode_idc,** when equal to 0, indicates that the neural network information for updating the NNPF is contained in the NNPFA SEI message, and the neural network information is in the format of an ISO/IEC 15938-17 bitstream. nnpfa_mode_idc equal to 1 indicates that the neural network information for updating the NNPF is identified by the URI indicated by nnpfa_uri with the format identified by the tag URI nnpfa_tag_uri. In a variant the URI is indicated by the nnpfc_uri syntax element.
**nnpfa_alignment_zero_bit_a** shall be equal to 0.
**nnpfa_tag_uri** contains a tag URI with syntax and semantics as specified in IETF RFC 4151 identifying the format and associated information about an update relative to the base NNPF with the same nnpfa_id value specified by nnpfa_structure_split_update_part_uri[ i ].

In a variant, nnpfa_alignment_zero_bit_a and nnpfa_tag_uri are omitted and the tag URI identifying the format and associated information about an update relative to the base NNPF with the same nnpfa_id value specified by nnpfa_structure_split_update_part_uri[ i ] is given by the value of nnpfc_tag_uri.
**nnpfa_structure_split_update_info_flag** equal to 1 specifies that nnpfa_structure_spli_update_part_nb_minus1, nnpfa_structure_spli_update_part_id[ i ] and nnpfa_structure_spli_update_part_uri[ i ] are present. nnpfa_structure_split_update_info_flag equal to 0 specifies that nnpfa_structure_split_update_part_nb_minus1, nnpfa_structure_spli_update_part_id[ i ] and nnpfa_structure_split_update_part_uri[ i ] are not present.
**nnpfa_alignment_zero_bit** shall be equal to 0.
**nnpfa_structure_split_update_part_nb_minus1** + 1 specifies the number of parts in the structure of the NNPF that need to be updated.
**nnpfa_structure_split_update_part_id[ i ]** specifies the identifier for the part in the list of parts in the NNPF structure that corresponds to the part of index i in the list of parts to be updated (update list). The part of index i in the update list should be used to update the part in the NNPF structure which has nnpfa_structure_split_update_part_id[ i ] as identifier.
**nnpfa_structure_split_part_update_uri[ i ]** specifies the URI with syntax and semantics as specified in IETF Internet Standard 66 identifying the part of index i in the list of parts to be updated (update list) in the structure of the neural network. The output of a part of index i in the update list is used as the input to the part of index j+1 where j corresponds to the index of the part in the based neural network corresponding to the part of index i in the update list. The part in the update list can be matched to the part in the structure of the neural network used as a base NNPF through the use of **identifier** nnpfc_structure_split_part_id[ i ]. All parts are specified with the format identified by the tag URI nnpfa_tag_uri when it exists or by the tag URI nnpfc_tag_uri otherwise.

Optionally, the additional syntax element **nnpfa_structure_split_tag_uri[ i ]** contains a tag URI with syntax and semantics as specified in IETF RFC 4151 identifying the format and associated information about the parts of the neural network used as an update relative to the base NNPF with the same nnpfc_id value specified by nnpfc_uri.

A decoding system may use the part URIs defined above to define a neural network used as a base NNPF when nnpfc_base_flag equal to 1, or used as an updated NNPF, when nnpfc_base_flag equal to 0.

If two NNPFs defined in a bitstream share the same URIs for some of their parts, the decoding system may use these URIs to fetch these parts only once for both NNPFs.

In a variant, the nnpfa_structure_split_part_id[ i ] are omitted or made optional (through conditioning by a presence flag for example). Each structure's part is then for example identified according to an externally available ordering of the updated parts.

In another variant, the signalling of the semantics is conditioned by a syntax element defining that a change of purposes occurred for the NNPF, for example the nnpf_target_purposes_present_flag syntax element as described below.

**Table 15: Variant syntax as proposed in embodiment 4 with the NNPF updating parts defined as several URIs**

| | |
|---|---|
| nn_post_filter_activation( payloadSize ) { | **Descriptor** |
| **nnpfa_target_id** | ue(v) |
| **nnpfa_cancel_flag** | u(1) |
| if( !nnpfa_cancel_flag) { | |
| **nnpfa_persistence_flag** | u(1) |
| **nnpfa_target_base_flag** | u(1) |
| **nnpfa_no_prev_clvs_flag** | u(1) |
| if( nnpfa_persistence_flag ) | |
| **nnpfa_no_foll_clvs_flag** | |
| **nnpfa_num_output_entries** | ue(v) |
| for( i = 0; i < nnpfa_num_output_entries; i++ ) | |
| **nnpfa_output_flag[** i ] | u(1) |
| if( more_data_in_payload( ) ) { | |
| **nnpfa_prompt_update_flag** | u(1) |
| if( nnpfa_prompt_update_flag ) { | |
| while( !byte_aligned( ) ) | |
| **nnpfa_alignment_zero_bit** | u(1) |
| **nnpfa_prompt** | st(v) |
| **}** | |
| **nnpfa_num_input_pic_shift** | ue(v) |
| **nnpfa_target_purposes_present_flag** | u(1) |
| if( nnpfa_target_purposes_present_flag ) *{* | |
| **nnpfa_target_purposes_idc** | u(16) |
| ***nnpfa_structure_split_update_info_flag*** | u(1) |
| *if( nnpfa_structure_split_update*_*info_flag) {* | |
| ***nnpfa_structure_split_update_part_nb_minus1*** | *u(16)* |
| *for( i = 0; i < nnpfa_structure_split_update_part_nb_minus1* + *1; i++ ){* | |
| ***nnpfa_structure_split_update_part_id[ i ]*** | |
| *while( !byte_aligned( ) )* | |
| ***nnpfa_metadata_alignment_b_zero_bit*** | *f(1)* |
| ***nnpfa_structure_split_update_part_uri[ i ]*** | *st(v)* |
| *}* | |
| *}* | |
| *}* | |
| *}* | |
| } | |
| } | |

In the variant where there are only two parts, a backbone and a tail, the above syntax can be simplified as follows, if both parts need to be updated. In a variant, similar changes can be applied to the syntax in Table 14.

**Table 16: Variant syntax as proposed in embodiment 4 with a backbone and a tail updating parts**

| | |
|---|---|
| if( nnpfa_target_purposes_present_flag ) *{* | |
| **nnpfa_target_purposes_idc** | u(16) |
| ***nnpfa_structure_split_update_info_flag*** | *u(1)* |
| *if( nnpfa_structure_split_update*_*info_flag) {* | |
| *while( !byte_aligned( ) )* | |
| ***nnpfa_metadata_alignment_b_zero_bit*** | *f(1)* |
| ***nnpfa_structure_split_update_backbone_uri[ i ]*** | |
| ***nnpfa_structure_split_update_tail_uri[ i ]*** | *st(v)* |
| *}* | |
| *}* | |
| *}* | |

In the variant where only one part, e.g., the tail, needs to be updated, the syntax may be modified as follows. In a variant, similar changes can be applied to the syntax in Table 14.

**Table 17: Variant syntax as proposed in embodiment 4 with a tail updating part**

| | |
|---|---|
| if( nnpfa_target_purposes_present_flag ) *{* | |
| **nnpfa_target_purposes_idc** | u(16) |
| ***nnpfa_structure_split_update_info_flag*** | *u(1)* |
| *if( nnpfa_structure_split_update*_*info_flag) {* | |
| *while( !byte_aligned( ) )* | |
| ***nnpfa_metadata_alignment_b_zero_bit*** | *f(1)* |
| ***nnpfa_structure_split_update_tail_uri[ i ]*** | *st(v)* |
| *}* | |
| *}* | |
| *}* | |

In a variant and for the NNPF structure described as a list of (at least one) URIs, the whole structure is proposed to be updated in the NNPFA SEI message, by signalling a (at least one) URI in the NNPFA SEI message.

In a variant, during update, the syntax contains a loop over all parts in the base NNPF's structure, but the signalling of each part and of its corresponding identifier is conditioned by individual presence flags which enable sending only the parts that need to be updated.

### Emb.7 Updated parts of the NNPF structure are signalled as individual bitstreams to update the original parts of the structure

In embodiment 7, the signaling allows updating parts of the NN model signalled as individual sub-bitstreams in the NNPFC SEI message through the signalling of metadata for at least one replacing part of the NNPF structure within the NNPFA SEI message as described in the syntax below.

**Table 18: Syntax as proposed in embodiment 4 with the NNPF updating parts defined as several separate bitstreams**

| | |
|---|---|
| nn_post_filter_activation( payloadSize ) { | **Descriptor** |
| **nnpfa_target_id** | ue(v) |
| **nnpfa_cancel_flag** | u(1) |
| if( !nnpfa_cancel_flag) { | |
| **nnpfa_persistence_flag** | u(1) |
| **nnpfa_target_base_flag** | u(1) |
| **nnpfa_no_prev_clvs_flag** | u(1) |
| if( nnpfa_persistence_flag) | |
| **nnpfa_no_foll_clvs_flag** | |
| **nnpfa_num_output_entries** | ue(v) |
| for( i = 0; i < nnpfa_num_output_entries; i++ ) | |
| **nnpfa_output_flag**[ i ] | u(1) |
| if( more_data_in_payload( ) ) { | |
| **nnpfa_prompt_update_flag** | u(1) |
| if( nnpfa_prompt_update_flag ) { | |
| while( !byte_aligned( ) ) | |
| **nnpfa_alignment_zero_bit** | u(1) |
| **nnpfa_prompt** | st(v) |
| } | |
| **nnpfa_num_input_pic_shift** | ue(v) |
| **nnpfa_target_purposes_present_flag** | u(1) |
| ***nnpfa_mode_idc*** | *u(1)* |
| *if( nnpfa_mode_idc = = 0 ) {* | |
| ***nnpfa_structure_split_update_info_flag*** | *u(1)* |
| *if( nnpfa_structure_split_update*_*info_flag) {* | |
| ***nnpfa_structure_split_update_part_nb _minus1*** | *u(16)* |
| *for(i = 0; i < nnpfc_structure_split_update_part_nb_minus1 + 1; i+ +* ) | |
| ***nnpfc_structure_split_update_part_id[ i ]*** | *u(16)* |
| *for(i = 0; i < nnpfc_structure_split_update_part_nb_minus1 + 1; i++ ){* | |
| ***nnpfc_structure_split_update_part_size[ i ]*** | *ue(v)* |
| *while( !byte_aligned( ) )* | |
| ***nnpfc_metadata_alignment_b_zero_bit*** | *u(1)* |
| *for(j = 0; j < nnpfc_structure_split_update_part_size; j++ )* | |
| ***nnpfc_structure_split_update_payload_byte**[ i ][ j ]* | *b(8)* |
| *}* | |
| *}* | |
| *}* | |
| } | |
| } | |
| } | |

In a variant the syntax is modified as below:

| | |
|---|---|
| nn_post_filter_activation( payloadSize ) { | **Descriptor** |
| **nnpfa_target_id** | ue(v) |
| **nnpfa_cancel_flag** | u(1) |
| if( !nnpfa_cancel_flag ) { | |
| **nnpfa_persistence_flag** | u(1) |
| **nnpfa_target_base_flag** | u(1) |
| **nnpfa_no_prev_clvs_flag** | u(1) |
| if( nnpfa_persistence_flag) | |
| **nnpfa_no_foll_clvs_flag** | |
| **nnpfa_num_output_entries** | ue(v) |
| for( i = 0; i < nnpfa_num_output_entries; i++ ) | |
| **nnpfa_output_flag[** i ] | u(1) |
| if( more_data_in_payload( ) ) { | |
| **nnpfa_prompt_update_flag** | u(1) |
| if( nnpfa_prompt_update_flag ) { | |
| while( !byte_aligned( ) ) | |
| **nnpfa_alignment_zero_bit** | u(1) |
| **nnpfa_prompt** | st(v) |
| } | |
| **nnpfa_num_input_pic_shift** | ue(v) |
| **nnpfa_target_purposes_present_flag** | u(1) |
| ***nnpfa_mode_ide*** | *u(1)* |
| } | |
| *if( nnpfa_mode_idc = = 0) {* | |
| ***nnpfa_structure_split_info_flag*** | *u(1)* |
| *if( nnpfa_structure_split_info_flag ) {* | |
| ***nnpfa_structure_split_part_nb_minus1*** | *u(16)* |
| *for( i* = *0; i < nnpfa_structure_split_part_nb_minus1 + 1; i++ ){* | |
| ***nnpfa_structure_split_part_id[ i ]*** | *u(16)* |
| ***nnpfa_structure_split_part_size[ i ]*** | *ue(v)* |
| *}* | |
| *}* | |
| /* ISO/IEC 15938-17 bitstream */ | |
| if( nnpfa_mode_idc = = 0) { | |
| *if( nnpfa_structure_split_info_flag ) {* | |
| *for( i = 0; i < nnpfastructure_split_part_nb_minus1 + 1; i++ ){* | |
| *while( !byte_aligned( ) )* | |
| ***nnpfa_metadata_alignment_b_zero_bit*** | *f(1)* |
| *for(j = 0; j < nnpfa_structure_split_part_size; j+ + )* | |
| ***nnpfa_structure_split_payload_byte[** i ][ j ]* | *b(8)* |
| *}* | |
| *}* | |
| } | |
| } | |

The semantics of the syntax elements is similar to the semantics of the syntax elements of either emb.2 or emb.5. All variants described with respect to these embodiments apply.

In a variant, there is only one part which corresponds to the whole bitstream describing the NNPF to be updated.

In a variant, the nnpfc_structure_split_info_flag or/and the nnpfa_mode_idc == 0 are optional.

In a variant and for the NNPF structure described as a list of (at least one) bitstreams, the whole structure is proposed to be updated in the NNPFA SEI message, by signalling a (at least one) bitstream in the NNPFA SEI message.

### Implementation

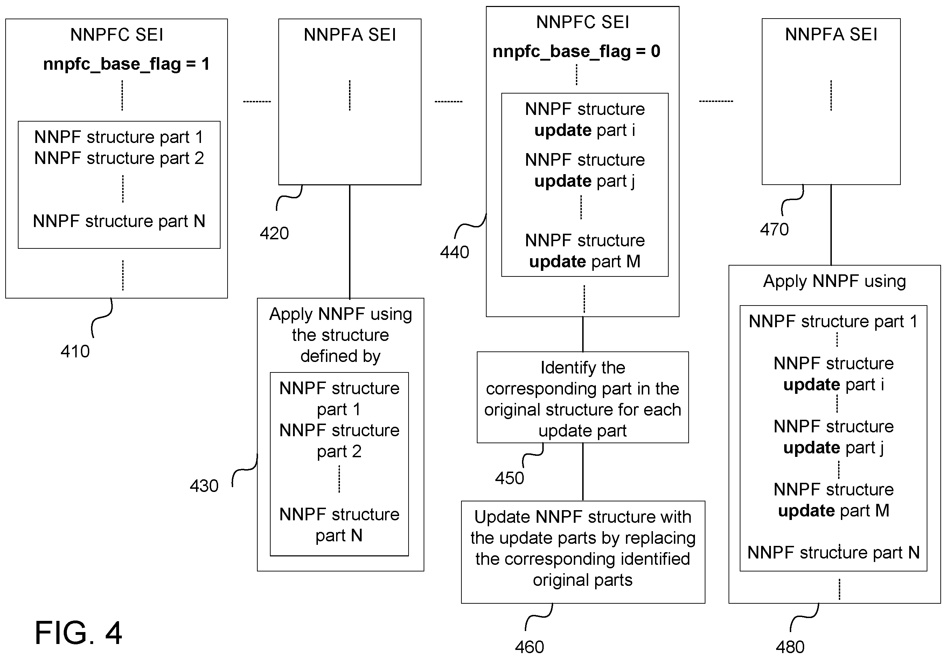

An example implementation corresponding to Emb.1, 2, 3, 4, 5 is provided in FIG. 4, illustrating the signalling and update of parts of the NNPF structure in a NNPFC SEI message.

In step 410, information related to an NNPF is signaled in an NNPFC SEI message, with information on the NNPF structure as described with several structure parts, denoted NNPF structure part 1, ... NNPF structure part N, of the given NNPF, optionally with identifiers for each part of the NNPF structure.

In step 420, an NNPFA SEI message associated to the NNPFC (for instance, having a target id - signaled in the NNPFA as nnpfa_target_id - equal to the id in the NNPFC - signaled in the NNPFC as nnpfc_id) is sent to activate the NNPF. The NNPFA SEI message does not contain any metadata related to an updated NNPF structure or related to an updated of at least one part of the NNPF structure. In this case, no update in the NNPF structure needs to be done. The NNPF is applied (430) using its current structure.

In a subsequent step (440), a second NNPFC SEI message is signaled (encoder) or received (decoder), where this time some update parts of the NNPF structure are signalled. In this case, a list of the update parts of the NNPF structure, denoted NNPF structure update part i, update part j, ... NNPF structure update part M is sent, optionally with identifiers to the corresponding original parts in the NNPF structure.

In step 450, at the decoder side, it proceeds to identify which original parts in the NNPF structure need to be updated by the signalled update parts. In case the identification is successful, the original parts in the NNPF structure are replaced (460) by the update parts.

In step 470, a second NNPFA SEI message associated to the NNPFC (for instance, having a target id - signaled in the NNPFA as nnpfa_target_id - equal to the id in the NNPFC - signaled in the NNPFC as nnpfc_id) to activate the NNPF is signaled (encoder) or received (decoder). In step 480, the NNPF is applied with a new structure composed of non-updated original parts and updated parts as updated in step 460.

In case in step 450, the identification is not or partially successful (for example the identifiers sent with the update parts or defined by external means do not match these of the parts in the base NNPF structure), it is decided not to apply the update of structure and the original structure of the NNPF is kept in step 480. In a variant, only the parts for which the identification was successful are updated and the modified and updated structure is used in step 480. In a variant, the identification is successful but a further step is applied checking that the input/output of the update parts match these of their corresponding parts in the base NNPF structure; and this further step is unsuccessful. In this case, either the structure is not updated or the parts for which a mismatch exists are not updated.

In an embodiment, when a specific part is not sent in the NNPFC SEI message, but for example only its identifier is sent, it may be understood that its value is set back to a default value, for example the original part sent in the NNPF SEI message.

In an embodiment, flags (i.e., binary information) can be sent to replace some of the specific parts. In this case, it may be understood that the value of these characteristics is set back to a default value. In an embodiment a bitfield mask may be signalled to inform on which parts in the NNPF structure may be set back to their original parts.

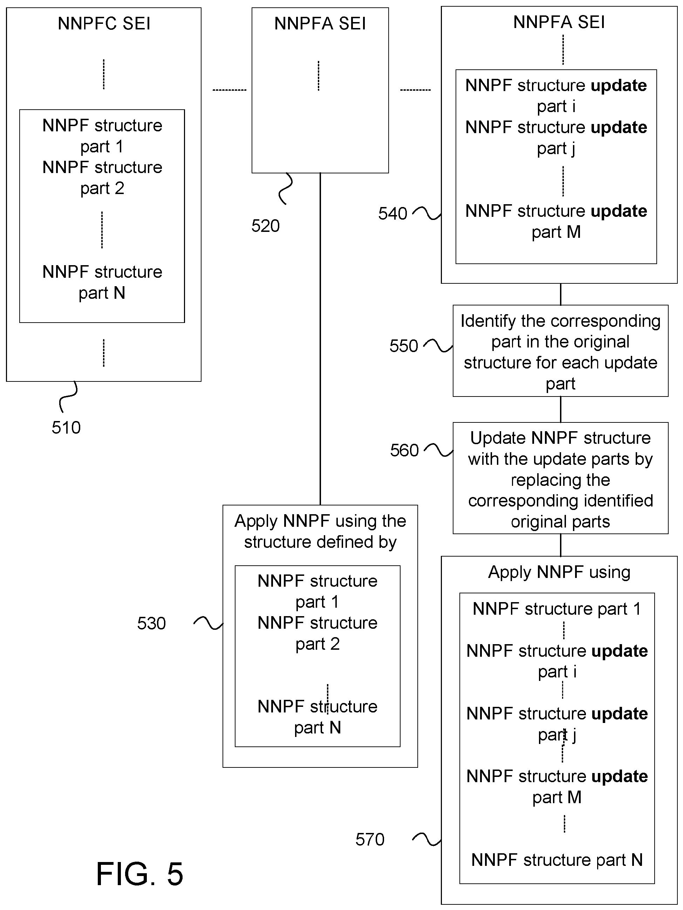

An example implementation corresponding to Emb.1, 2, 3, 6, 7 is provided in FIG. 5, which illustrates the update of parts of the NNPF structure by update parts sent in a NNPFA SEI message.

In step 510, information related to an NNPF is signaled in an NNPFC SEI message, with information on the NNPF structure as described with several structure parts, denoted NNPF structure part 1, ... NNPF structure part N, of the given NNPF, optionally with identifiers for each part of the NNPF structure.

In step 520, an NNPFA SEI message associated to the NNPFC (for instance, having a target id - signaled in the NNPFA as nnpfa_target_id - equal to the id in the NNPFC - signaled in the NNPFC as nnpfc_id) is sent to activate the NNPF. The NNPFA SEI message does not contain any metadata related to an updated NNPF structure or related to an updated of at least one part of the NNPF structure. In this case, no update in the NNPF structure needs to be done. The NNPF is applied (530) using its current structure.

In example of FIG. 5, a second NNPFA SEI is signaled (encoder) or received (decoder) (540), where some update parts of the NNPF structure are signalled. In this case, a list of the update parts of the NNPF structure, denoted NNPF structure update part i, NNPF structure update part j, ... NNPF structure update part M is sent, optionally with identifiers to the corresponding original parts in the NNPF structure.

In step 550, at the decoder side, it proceeds to identify (550) which original parts in the NNPF structure need to be updated by the signalled update parts. In case the identification is successful, the original parts in the NNPF structure are replaced by the update parts in step560. In step 570, the NNPF is applied with a new structure composed of non-updated original parts and updated parts.

In case in step 550, the identification is not or partially successful, it is decided not to apply the update of structure and the original structure of the NNPF is kept in step 570. In a variant, only the parts for which the identification was successful are updated and the modified and updated structure is used in step 570. In a variant, the identification is successful but a further step is applied checking that the input/output of the update parts match these of their corresponding parts in the base NNPF structure; and this further step is unsuccessful. In this case, either the structure is not updated or the parts for which a mismatch exists are not updated.

In an embodiment, when a specific part is not sent in the NNPFA SEI message, but for example only its identifier is sent, it may be understood that its value is set back to a default value, for example the original part sent in the NNPF SEI message.

In an embodiment, flags (i.e., binary information) can be sent to replace some of the specific parts. In this case, it may be understood that the value of these characteristics is set back to a default value. In an embodiment a bitfield mask may be signalled to inform on which parts in the NNPF structure may be set back to their original parts.

In an embodiment, the updated parts of the NNPF structure are sent in another structure than the NNPFA SEI message, for example, in a new SEI message.

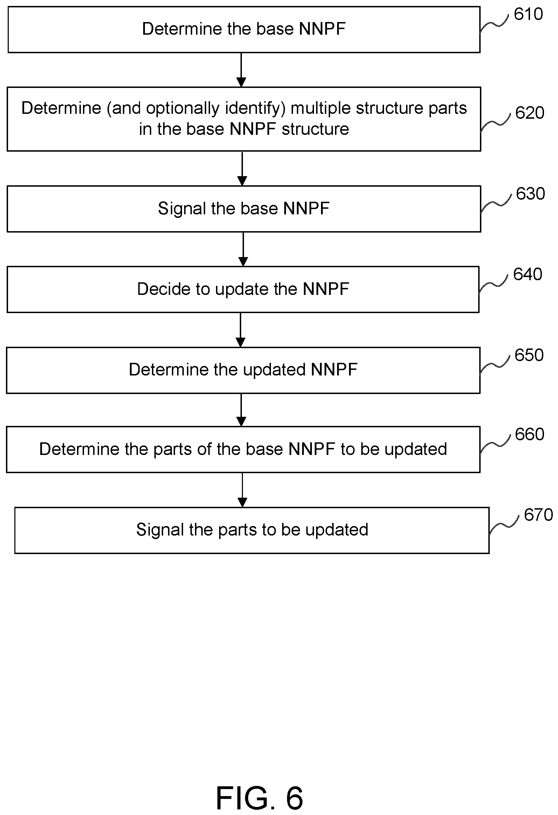

FIG. 6 illustrates a method of updating the NNPF structure at the encoder side, according to one embodiment. In step 610, a first base NNPF is determined with its corresponding structure, i.e., its architecture, weights and parameters. In step 620, several structure parts are determined and optionally identified in the base NNPF structure, which allow to split or divide the base NNPF structure.

In step 630, the base NNPF is signalled, possibly with a multiple-part structure. This structure may be signalled within the bitstream, for example as several URIs or several sub-bitstreams, or any other means. The structure may be signalled in a syntax, for example, an SEI message (e.g., an NNPFC SEI message). In step 640, it is decided to update the NNPF, for example, when the purpose of the NNPF is changed. In step 650, an updated version of the NNPF structure is determined. The purpose of the NNPF might be updated to allow using it for different tasks for example resolution upsampling or quality enhancement. Having the possibility to update a single NNPF capable of proceeding to two or more different tasks would allow to avoid sending, storing and using two or more NNPFs each responsible for a single task. Updating the purpose of an NNPF may result in less memory storage and less transmission of data compared to having individual NNPFs per task or purpose.

In step 660, the individual parts of the NNPF structure that need to be updated are determined and identified. In step 670, the parts that need to be updated may be signalled within the bitstream, for example as several URIs or several sub-bitstreams, or any other means. The update parts may be signalled in a syntax, for example an SEI message (e.g., an NNPFC SEI message, an NNPFA SEI message). Optionally, corresponding identifiers of the update parts are signalled.

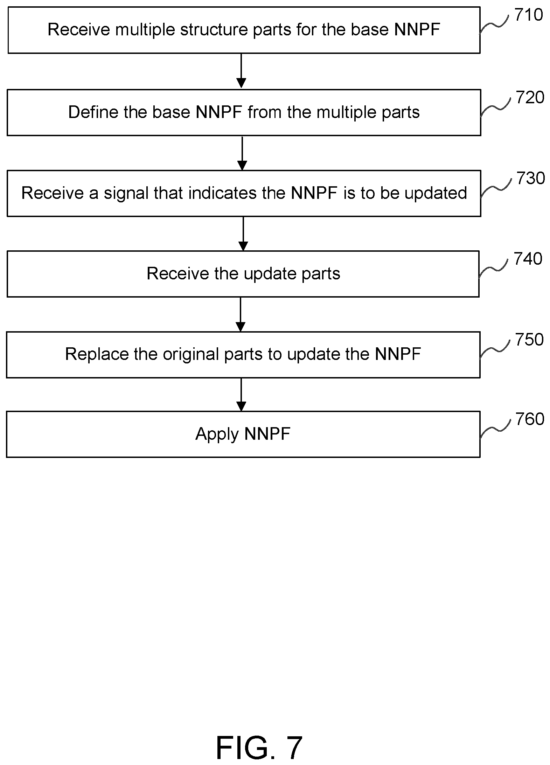

FIG. 7 illustrates a method of updating the NNPF structure at the decoder side, according to one embodiment. In step 710, multiple parts of a first base NNPF structure are received in the bitstream, for example as several URIs or several sub-bitstreams, or any other means. The multiple parts may be signalled in a syntax, for example, an SEI message (e.g., an NNPFC SEI message, an NNPFA SEI message). Optionally, corresponding identifiers of the parts are received.

In step 720, a base NNPF structure is built from the received multiple parts and optionally the corresponding identifiers. In step 730, a signal is received to indicate that the base NNPF needs to be updated. This signal may be carried through a message, for example an SEI message, an NNPFC SEI message, an NNPFA SEI message. In step 740, the parts that need to be used to update in the NNPF structure are received within the bitstream, for example as several URIs or several sub-bitstreams, or any other means. The multiple update parts may be received in a message, for example an SEI message, an NNPFC SEI message, an NNPFA SEI message. Optionally, corresponding identifiers of the update parts are received.

In step 750, the parts that need to be updated in the base NNPF structure are replaced by the update parts received in step 740, possibly with the help of their respective identifiers. In step 760, the NNPF is applied for example for resolution upsampling, chroma upsampling, temporal resampling, tone mapping, quality enhancement, etc., with its updated structure.

In the above, many syntax elements are described. It should be noted their names can be replaced by other wordings, for example, nnpfc_structure_split_info_flag, nnpfc_structure_split_part_nb_minus1, nnpfc_structure_split_part_uri[ i ], nnpfc_structure_split_part_id[ i ] can be replaced by nnpfc_architecture_split_info_flag, nnpfc_architecture_split_part_nb_minus1, nnpfc_architecture_split_part_uri[ i ], nnpfc_architecture_split_part_id[ i ], respectively.

In all the above embodiments, it is to be understood that the URIs or sub-bitstreams used to define the parts of the base NNPF structure or the update parts can be specified using other standards than the ones mentioned above. Also, it is to be understood that other means than URIs or sub-bistreams may be used to signal an NNPF structure as sub-parts or to signal some parts of an NNPF structure that need to be updated.

In the above, we describe how the NNPF structure can be divided into multiple parts and how to update one or more individual parts. It is noted that the splitting into parts and corresponding update apply to all kinds of NNs, not just NN for post filters as defined above (e.g., in the NNPFC SEI messages). For example, it may apply for NNs used as preprocessing steps, NNs used for data (e.g., video) compression.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the pre-processor and post-processor described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method, comprising:
accessing a plurality of structure parts of a base neural network;
receiving at least a structure part that is used to update a corresponding part of the base neural network;
updating the corresponding part of the base neural network with the at least a structure part to form an updated neural network; and
processing a video with the updated neural network.

2. An apparatus, comprising one or more processors and at least one memory coupled to the one or more processors, wherein the one or more processors are configured to:
access a plurality of structure parts of a base neural network;
receive at least a structure part that is used to update a corresponding part of the base neural network;
update the corresponding part of the base neural network with the at least a structure part to form an updated neural network; and
process a video with the updated neural network.

3. The method of claim 1, or the apparatus of claim 2, wherein the base neural network is used as a post filter.

4. The method of claim 1 or 3, or the apparatus of claim 2 or 3, wherein the plurality of structure parts are received using uniform resource identifiers.

5. The method of claim 1 or 3, or the apparatus of claim 2 or 3, wherein the plurality of structure parts are received as sub-streams.

6. The method of any one of claim 1 and 3-5, or the apparatus of any one of claims 2-5, wherein the at least a structure part that is used to update is received through an NNPFC message or an NNPFA message.

7. The method of any one of claims 1 and 3-6, or the apparatus of any one of claims 2-6, wherein the at least a structure part that is used to update is matched to the corresponding part of the base neural network matching an identifier of the at least a structure part that is used to update to an identifier of the corresponding part of the base neural network.

8. A method of video encoding, comprising:
dividing a base neural network into a plurality of structure parts;
signaling the plurality of structure parts of the base neural network;
determining that the base neural network is to be updated;
determining that at least a structure part is to be updated in the base neural network; and
signaling the at least a structure part that is to be updated.

9. An apparatus for video encoding, comprising one or more processors and at least one memory coupled to the one or more processors, wherein the one or more processors are configured to:
divide a base neural network into a plurality of structure parts;
signal the plurality of structure parts of the base neural network;
determine that the base neural network is to be updated;
determine that at least a structure part is to be updated in the base neural network; and
signal the at least a structure part that is to be updated.

10. The method of claim 8, or the apparatus of claim 9, wherein the base neural network is used as a post filter.

11. The method of claim 8 or 10, or the apparatus of claim 9 or 10, wherein the plurality of structure parts are signaled using uniform resource identifiers.

12. The method of claim 8 or 10, or the apparatus of claim 9 or 10, wherein the plurality of structure parts are signaled as sub-streams.

13. The method of any one of claim 8 and 10-12, or the apparatus of any one of claims 9-12, wherein the at least a structure part that is used to update is signaled through an NNPFC message or an NNPFA message.

14. The method of any one of claims 8 and 10-13, or the apparatus of any one of claims 9-13, wherein an identifier is signaled for the at least a structure part that is used to update.

15. A signal, formatted to include:
a syntax indicating that a base neural network is to be updated, wherein the base neural network includes a plurality of structure parts; and
at least a structure part that is used to update a corresponding part in the base neural network.
